# EUROPÄISCHE PATENTANMELDUNG

(11) **EP 3 760 472 A1**
(43) Veröffentlichungstag der Anmeldung: **06.01.2021**
(21) Anmeldenummer: 20183963.6
(22) Anmeldetag: 03.07.2020
(51) Int. Cl.: B60L 53/14, B60L 53/30, B60L 53/35

(54) **ELEKTRISCHE LADEVORRICHTUNG**

(30) Priorität: 04.07.2019 AT 506092019; 25.07.2019 AT 506792019
(71) Anmelder: VOLTERIO GMBH, 8010 Graz (AT)
(72) Erfinder: Flechl, Christian, 8010 Graz (AT); Mascher, Robert, 8010 Graz (AT); Krasser, Edwin, 8010 Graz (AT)
(74) Vertreter: Wirnsberger & Lerchbaum Patentanwälte OG

(57) **Zusammenfassung**

Die Erfindung betrifft eine Vorrichtung (1) zum elektrischen Energieaustausch eines Objektes mit einem Akkumulator, insbesondere zum Laden eines Akkumulators eines Elektrofahrzeuges, aufweisend ein Kontaktierungselement (2), eine Hebeeinrichtung (3) und eine Basis (4), wobei das Kontaktierungselement (2) an der Hebeeinrichtung (3) angeordnet ist und die Hebeeinrichtung (3) mit der Basis (4) in Verbindung steht. Erfindungsgemäß ist vorgesehen, dass die Hebeeinrichtung (3) im Wesentlichen senkrecht in einer ersten Bewegungsrichtung (5) bewegbar und auf der Basis (4) verschiebbar ist, wobei die Basis (4) um eine Schwenkachse (6) drehbar gelagert ist.

Des Weiteren betrifft die Erfindung eine Verwendung einer solchen Vorrichtung (1), die Verwendung eines vertikal ausfahrbaren Elementes und ein Verfahren zum elektrischen Laden einer Einrichtung.

## Beschreibung

Die Erfindung betrifft eine Vorrichtung zum elektrischen Energieaustausch eines Objektes mit einem Akkumulator, insbesondere zum Laden eines Akkumulators eines Elektrofahrzeuges, aufweisend ein Kontaktierungselement, eine Hebeeinrichtung und eine Basis, wobei das Kontaktierungselement an der Hebeeinrichtung angeordnet ist und die Hebeeinrichtung mit der Basis in Verbindung steht.

Des Weiteren betrifft die Erfindung eine Verwendung einer derartigen Vorrichtung.

Darüber hinaus betrifft die Erfindung eine Verwendung eines Scherenhubtisches.

Schließlich betrifft die Erfindung ein Verfahren zum elektrischen Laden einer Einrichtung, insbesondere einer beweglichen Einrichtung wie eines Elektrofahrzeuges, wobei die Einrichtung für eine elektrische Verbindung mit einer Spannungsquelle positioniert wird, um einen Akkumulator der Einrichtung zu laden.

Durch eine stark steigende Anzahl an Elektrofahrzeugen im Fahrzeugmarkt steht auch eine Entwicklung von geeigneten Ladevorrichtungen für Elektrofahrzeuge im Vordergrund. Dabei ist eine hohe örtliche Verfügbarkeit von Ladevorrichtungen von Bedeutung, allerdings ist das Laden eines Akkumulators in vielen Fällen ausschließlich an gekennzeichneten Ladestationen/Parkplätzen möglich. Dies könnte in Zukunft zu langen Wartezeiten an Ladestationen führen. Somit wäre es von Vorteil, wenn jeder Parkplatz eine solche Ladestation zum Laden des Akkumulators aufweisen würde.

Für Elektrofahrzeuge sind, um eine Ladezeit des Akkumulators auf ein praktisches und alltäglich anwendbares Maß zu reduzieren, sehr hohe Ladeleistungen von Vorteil. Die für solche Ladeleistungen verfügbaren Kabel sind jedoch sehr unhandlich und nicht von jedem Benutzer handhabbar. Aus diesem Grund ist es von Vorteil, wenn ein Ladevorgang selbsttätig und automatisch, ohne Eingriff des Benutzers, durchgeführt werden kann. Dies gilt insbesondere, wenn man antizipiert, dass zukünftig autonom fahrende Fahrzeuge wie beispielsweise Robotertaxis ganz besonders auf eine automatisierte Ladeinfrastruktur angewiesen sein werden.

Aus dem Stand der Technik sind bereits solche automatischen Ladeeinrichtungen bekannt. Wenn das Elektrofahrzeug auf einem mit einer solchen automatisierten Ladevorrichtung aus dem Stand der Technik ausgerüsteten Parkplatz abgestellt wird, kann ein Kontaktierungselement, welches über ein Kabel mit einer Spannungsquelle verbunden ist, aus einer Ruheposition in eine Kontaktposition bewegt werden. Um das Kontaktierungselement in Kontaktposition zu bringen, in welcher das Kontaktierungselement mittelbar mit dem Akkumulator des Elektrofahrzeuges gekoppelt ist, bewegt beispielsweise ein mehrteiliger Arm das Kontaktierungselement durch Verschiebung und Drehung um mindestens eine Achse zu einem Anschlusskontakt mit dem der Akkumulator in Wirkverbindung steht. Eine vertikale Bewegung kann grundsätzlich ausreichend sein, eine horizontale Bewegungsmöglichkeit erhöht jedoch den Komfort für einen Benutzer, weil nicht exakt eingeparkt werden muss.

Die Vorrichtungen aus dem Stand der Technik wirken sich insofern nachteilig aus, als diese sehr komplex ausgebildet sind. Dies betrifft einerseits einen komplexen Aufbau, aber auch eine komplexe Funktionsweise der Vorrichtung, beispielsweise ein zugrundliegender komplexer Steuerungsmechanismus zur Bewegung des mehrteiligen Armes, um das Kontaktierungselement mit dem Anschlusskontakt des Elektrofahrzeuges zu koppeln, wobei der Arm dreidimensional um oder entlang mehrerer Achsen drehbar bzw. bewegbar ist. Darüber hinaus wirkt sich eine dafür notwendige Mechanik als wartungsintensiv aus, da die Komponenten verschmutzungsanfällig und somit in der Folge fehleranfällig sein können.

Aufgabe der Erfindung ist es, eine Vorrichtung der eingangs genannten Art bereitzustellen, welche einfach ausgebildet und wenig wartungsintensiv ist.

Des Weiteren soll eine Verwendung einer solchen Vorrichtung angegeben werden.

Ein weiteres Ziel ist es, eine Verwendung eines Scherenhubtisches anzugeben.

Schließlich ist es Ziel der Erfindung, ein Verfahren der eingangs genannten Art derart weiterzubilden, dass mit einem einfachen Aufbau bei reduzierter Wartungsintensität ein Laden eines Elektrofahrzeuges ermöglicht wird.

Die Aufgabe der Erfindung wird dadurch gelöst, dass bei einer Vorrichtung der eingangs genannten Art die Hebeeinrichtung im Wesentlichen senkrecht in einer ersten Bewegungsrichtung bewegbar und auf der Basis verschiebbar ist, wobei die Basis um eine Schwenkachse drehbar gelagert ist.

Ein mit der Erfindung erzielter Vorteil ist insbesondere darin zu sehen, dass aufgrund des einfachen Aufbaus der Hebeeinrichtung, auf welcher das Kontaktierungselement angeordnet ist, eine rasche Ansteuerung des Anschlusskontaktes am Akkumulator des Elektrofahrzeuges ausführbar ist. Das Kontaktierungselement kann in einem ersten Schritt in einer Ebene direkt unter dem Anschlusskontakt des Fahrzeuges positioniert werden, wobei eine Steuerung des Kontaktierungselementes im ersten Schritt einer Positionierung lediglich in zwei Freiheitsgraden, innerhalb der Ebene, nötig ist. Ein daraus resultierender weiterer Vorteil der Bewegung innerhalb der Ebene liegt darin, dass während der Positionierung im ersten Schritt eine Abdeckungseinrichtung der Vorrichtung nicht entfernt werden muss. Dadurch gelangt deutlich weniger Schmutz und Verunreinigung in die Vorrichtung, da die Abdeckungseinrichtung erst kurz vor einem Anheben der Hebeeinrichtung geöffnet werden muss. Darüber hinaus ist nach erfolgter Ladung des Akkumulators durch eine Absenkbarkeit der Hebeeinrichtung innerhalb der Basis, wobei die Basis selbst in einem Untergrund abgesenkt sein kann, eine platzsparende Positionierung der Hebeeinrichtung in einem Ruhezustand möglich.

Auf diese Weise kann ein Elektrofahrzeug auf einem mit einer solchen Vorrichtung ausgestatteten Stellplatz abgestellt und ein wenig wartungsintensives, automatisches Laden des Akkumulators des Elektrofahrzeuges mittels einer einfach steuerbaren Vorrichtung von der Bodenseite oder von der Fahrzeugseite auf jedem einzelnen Stellplatz ermöglicht werden.

Es hat sich bewährt, dass das Kontaktierungselement auf einer Oberseite der Hebeeinrichtung angeordnet ist. Dadurch kann das Kontaktierungselement durch eine Hebebewegung direkt und gleichmäßig, ohne wesentlichen Ausgleich einer Schräglage des Kontaktierungselementes, an den Anschlusskontakt des Fahrzeuges, welcher sich beispielsweise an einer Unterseite eines Elektrofahrzeuges befindet, angekoppelt werden. Bevorzugt ist die Hebeeinrichtung auf der Basis im Wesentlichen parallel zu einer Grundfläche der Basis verschiebbar. Dies ermöglicht eine einfache Bewegung innerhalb der Ebene, wodurch eine einfache, zielgerichtete Positionierung des Kontaktierungselementes unter dem Anschlusskontakt des Fahrzeuges ausführbar ist. Durch Dreck, Schneematsch oder sonstige sich vom Elektrofahrzeug lösende, verunreinigte Wassertropfen besteht ein Verschmutzungsrisiko für die Vorrichtung. Da die Bewegung parallel zur Grundfläche der Basis und innerhalb der Basis erfolgt, können die Basis und die Hebeeinrichtung während der Positionierung abgedeckt bleiben, weswegen ein Verschmutzungsrisiko und somit ein Versagensrisiko der Vorrichtung, welche zur Kontaktierung des Akkumulators in Richtung Elektrofahrzeug geöffnet werden soll, minimiert werden kann.

Es ist von Vorteil, wenn die erste Bewegungsrichtung im Wesentlichen orthogonal zur Grundfläche der Basis ausgerichtet ist. Dadurch kann die Hebeeinrichtung, welche in einem ersten Schritt zur Positionierung direkt unter dem Anschlusskontakt des Fahrzeuges innerhalb einer Ebene parallel zur Grundfläche der Basis verschoben worden ist, in einem nächsten Schritt orthogonal zur Grundfläche zum Anschlusskontakt des Fahrzeuges bewegt und mit diesem gekoppelt werden. Dies ermöglicht eine einfache Steuerung, aber auch zielgerichtete Koppelung des Kontaktierungselementes mit dem Akkumulator bzw. Onboard-Charger.

Es hat sich bewährt, dass die Schwenkachse im Wesentlichen parallel zur ersten Bewegungsrichtung ausgerichtet ist. Dies ermöglicht eine Drehung der Basis und somit des Kontaktierungselementes um die Schwenkachse im Wesentlichen parallel zur Grundfläche der Basis. Dadurch bleibt die Basis in Kontakt mit dem Untergrund. Eine solche Drehbewegung der Basis mit absoluter Positions- bzw. Verdrehungsmessung kann mittels eines absoluten Drehwinkelgebers erfolgen, beispielsweise mittels Verdrehung eines Magneten gegenüber einem Hall-Sensor. Dies ermöglicht eine exakte und einfache Positionierung des Kontaktierungselementes.

Zweckmäßigerweise ist ein erster Antrieb vorgesehen, mit welchem eine Bewegung der Hebeeinrichtung in die erste Bewegungsrichtung steuerbar ist. Dadurch wird eine fehlerfreie Ankoppelung des Kontaktierungselementes an das Fahrzeug gewährleistet. Die Hebeeinrichtung kann grundsätzlich beliebig ausgebildet sein. Beispielsweise kann es sich um eine vertikal aus- und einfahrbare Teleskopstange oder einen Teleskoparm handeln. Auch ein Linearmotor oder eine andere Art eines Antriebes zur Vertikalbewegung kann vorgesehen sein.

Bevorzugt ist die Hebeeinrichtung als ein Scherenhubtisch ausgebildet. Dadurch wird eine richtungstreue und einfache Bewegung des Kontaktierungselementes in die erste Bewegungsrichtung und somit senkrecht zur Grundfläche der Basis sichergestellt. Ein Verkippen des Kontaktierungselementes vor Kontakt mit dem Akkumulator erhöht eine Wahrscheinlichkeit eines unvollständigen und somit fehlerhaften elektrischen Kontaktes. Dieser Fehlermodus kann durch einen Scherenhubtisch verhindert werden, denn durch die richtungstreue senkrechte Bewegungsrichtung des Scherenhubtisches ist eine gleichmäßige, direkte und fehlerfreie Koppelung des Kontaktierungselementes an das Fahrzeug möglich.

Zum Schutz vor Verschmutzung kann der Scherenhubtisch oder eine alternative Einrichtung für den Vertikalhub in einer Ruhelage durch einen umlaufenden vertikalen Faltenbalg oder mittels verschiebbarer Lamellenelemente, welche beispielsweise aus Federstahlblech und/oder Kunststoff ausgebildet sind, oder durch Fächer verschlossen sein. Dadurch ist die Hebeeinrichtung während der Bewegung in die erste Bewegungsrichtung vor Fremdkörpern bzw. Verschmutzung und auch in Kontaktposition geschützt, wenn das Kontaktierungselement mit dem Akkumulator zum Laden gekoppelt ist. Des Weiteren kann der Anschlusskontakt durch ein Verschlussmittel, wie beispielsweise eine Blende, welche den Anschlusskontakt vor Verschmutzung schützt, abgedeckt sein.

An der Oberseite der Hebeeinrichtung kann zwischen Hebeeinrichtung und Kontaktierungselement ein weiterer Hebemechanismus, beispielsweise ein weiterer Scherenhubtisch, vorgesehen sein, welcher das Kontaktierungselement aus einem Träger an der Oberseite der Hebeeinrichtung über eine oberste Ebene der Hebeeinrichtung anheben kann, um ein Kontaktieren bei sehr geringer Unterbodenhöhe des Fahrzeuges zu ermöglichen. Der weitere Hebemechanismus kann gefedert sein, um Beladungszustände des Elektrofahrzeuges ausgleichen zu können.

Es hat sich bewährt, dass ein zweiter Antrieb für eine Drehung der Basis um die Schwenkachse vorgesehen ist, wobei eine Lagerung der Basis vorzugsweise als ein Drehkranz ausgebildet ist. Dadurch kann die Drehung der Basis über den Antrieb elektronisch gesteuert werden, wodurch eine automatisierte Positionierung der Basis hinsichtlich Drehung um die Schwenkachse ermöglicht wird. Ein Vorteil der Verwendung eines Drehkranzes ist eine Übertragung einer Drehbewegung bei gleichzeitiger Sperrung der restlichen fünf Freiheitsgrade, weshalb die Basis nur in einer Ebene schwenkbar ist. Dies vereinfacht die elektronische Steuerung der Drehbewegung. Andere Arten der Lagerung kommen auch infrage, beispielsweise Kugeldrehverbindungen oder andere Drehwerke. Mit Vorteil ist die Schwenkachse und damit auch die zugehörige Lagerung möglichst weit außen an einem hinteren Ende der Vorrichtung angeordnet, sodass mit geringer Drehung eine möglichst große Auslenkung erzielt wird.

Zusätzlich kann die Lagerung der Basis an einem Drehpunkt gefedert sein, um ein müheloses, reibungsarmes Verdrehen zu ermöglichen und die Basis einige Millimeter anzuheben, beispielsweise 5 mm. Bevorzugt werden für die Federung Wellenfedern eingesetzt, welche sich durch einen platzsparenden Aufbau und konstante Kraftübertragung über große Federwege auszeichnen. Durch eine derartige Federung können Belastungen von bis zu 900 kg, entsprechend einer maximalen Belastung an einem Reifen eines typischen Personenkraftwagens, nicht über die Räder, sondern flächig über die Vorrichtung abgeleitet werden. Auf diese Weise können Beschädigungen verhindert und eine Lebensdauer der Vorrichtung optimiert werden.

Um eine effiziente Drehung der Basis auszuführen, kann zumindest ein Antriebsrad vorgesehen sein, mit welchem die Drehung der Basis ausführbar ist, wobei das zumindest eine Antriebsrad vorzugsweise gefedert gelagert ist. Mithilfe des aktiv angetriebenen Antriebsrades und eines oder mehrerer gegenüberliegender Stützräder kann eine störungsfreie Positionierung der Basis erreicht werden, da das Antriebsrad eventuell vorhandene Verschmutzungen am Untergrund bis zu einem gewissen Maß überfahren kann. Dadurch ist eine Drehbewegung deutlich weniger fehleranfällig. Darüber hinaus kann für eine stabile Drehbewegung der Vorrichtung mindestens eine Dreipunktauflage gewählt werden. Die Vorteile der Dreipunktauflage sind einerseits eine mechanische Bestimmtheit der Lagerung und andererseits eine damit zu erreichende Stabilität auch auf unebenem Untergrund.

Alternativ kann die Drehung der Basis auch mittels eines Kettenantriebes, bevorzugt mittels eines Kettenantriebes eines Panzers, ausgeführt werden. Dadurch kann eine störungsfreie Drehbewegung auf losem Untergrund, beispielsweise auf Schotter und/oder Kies, gewährleistet werden.

Es ist von Vorteil, wenn die Positionierung des Kontaktierungselementes in zwei Schritten erfolgt. In einem ersten Schritt wird eine Grobpositionierung mittels der Vorrichtung und in einem zweiten Schritt eine Feinpositionierung des Kontaktierungselementes ausgeführt, wobei für die Feinpositionierung das Kontaktierungselement vorzugsweise als ein selbstzentrierendes, positionstolerantes 360°-Steckelement ausgebildet ist.

Um eine einfache Funktionsweise der Hebeeinrichtung zu erreichen, kann vorgesehen sein, dass die Hebeeinrichtung auf Rollelementen und/oder Gleitelementen gelagert ist, wobei die Rollen und/oder Gleitelemente vorzugsweise seitlich an der Hebeeinrichtung angeordnet sind. Dadurch kann die Hebeeinrichtung an den Kontaktpunkten mit der Basis störungs- und reibungsarm bewegt werden, ohne dass die Hebeeinrichtung einen Kontakt mit der Basis verliert. Dies gewährt eine volle Funktionsfähigkeit der Hebeeinrichtung.

Bevorzugt umfasst die Basis ein Gehäuse, vorzugsweise ein Aluminiumgehäuse, und ein Förderband, insbesondere ein Gelenkförderband. Das Gehäuse, vorzugsweise aufweisend einen stabilen, umlaufenden Rahmen, dient zum Schutz der Basis und aller Komponenten der Basis, wie beispielsweise dem Förderband, vor Verschmutzung und auch vor Beschädigung durch äußere Einflüsse oder ein versehentliches Überfahren.

Es ist von Vorteil, wenn eine Hebeeinrichtung mittels eines Förderbandes auf der Basis verschiebbar ist, wobei das Förderband vorzugsweise aus Schanierplatten ausgebildet ist und vorzugsweise zumindest zwei Umlenkrollen umfasst. Das Förderband dient der linearen Bewegung der Hebeeinrichtung parallel zur Grundfläche, vorzugsweise entlang einer Längsachse der Basis. Förderbänder sind weniger wartungsanfällig als andere Einrichtungen zur Bewegung eines Objektes. Das Förderband verschließt den entstehenden Hohlraum bei bzw. nach Ausfahren des Hebeeinrichtung möglichst vollständig. Des Weiteren beschränkt das Förderband eine Verschiebung der Hebeeinrichtung entlang eines Freiheitsgrades, weswegen eine Steuerung des Förderbandes einfach programmierbar ist.

Um das Förderband zu bewegen, kann zumindest ein Förderbandantrieb vorgesehen sein, mit dem das Förderband bewegbar ist, wobei der zumindest eine Förderbandantrieb vorzugsweise als ein Jalousiemotor ausgebildet ist. Dadurch ist eine automatische Positionierung der Hebeeinrichtung entlang des einen Freiheitsgrades parallel zur Grundfläche der Basis durchführbar. Der Förderbandantrieb kann auch elektronisch ansteuerbar sein, sodass eine exakte Positionierung der Hebeeinrichtung umsetzbar ist. Beispielsweise kann das Förderband bei Ausbildung als Scharnierplattenförderband sowohl geschoben als auch gezogen werden, um so auch die Hebeeinrichtung zu bewegen. Möglich ist es auch, dass die Hebeeinrichtung als solche linear in einer Förderbandebene angetrieben wird und dadurch das Förderband passiv mitbewegt. Als Sicherheitsfunktion können eine Blockiererkennung und ein Überlastungsschutz vorgesehen sein, um das Förderband im Falle einer Blockierung durch ein Hindernis zu stoppen. Dadurch können rechtzeitig Schäden am Förderband vermieden werden.

Unter dem Förderband kann gegebenenfalls eine Folie vorgesehen sein, um das Förderband abzudichten.

Als praktikabel hat sich erwiesen, wenn die Hebeeinrichtung und das Förderband in einem Ruhezustand durch eine Abdeckungseinrichtung verdeckbar sind. Auf diese Weise werden die Hebeeinrichtung und das Förderband vor von außen eindringender Schmutzpartikel und/oder Schmutzwasser geschützt, wodurch die Wartungsintervalle reduziert werden können. Darüber hinaus gestaltet sich eine Reinigung der mechanischen Komponenten der Vorrichtung einfacher, da ein Verschmutzungsgrad pro Wartungseinheit geringer ausfällt.

Optional kann die Vorrichtung in einem Untergrund versenkt sein, wobei die Abdeckungseinrichtung der Vorrichtung mit einer Erdoberfläche planar abschließend angeordnet sein kann. Dadurch kann das Elektrofahrzeug einfach und ungehindert auf einem Parkplatz einfahren und erst wenn sich das Fahrzeug im Stillstand befindet und ladebereit ist, wird die Vorrichtung innerhalb der Basis unter dem Anschlusskontakt des Elektrofahrzeuges positioniert und die Abdeckungseinrichtung geöffnet, um das Kontaktierungselement mittels der Hebeeinrichtung senkrecht zum Anschlussstück des Akkumulators anzuheben. Auf diese Weise wird die Vorrichtung bis unmittelbar vor dem Ladevorgang vor Beschädigung durch einfahrende Elektrofahrzeuge geschützt.

Da das Kontaktierungselement für einen fehlerfreien Kontakt mit dem Akkumulator und eine fehlerfreie Funktionsweise verschmutzungsfrei sein sollte, ist es von Vorteil, wenn das Kontaktierungselement als Abdeckung eine eigene Blende aufweist, welche erst unmittelbar vor Koppelung des Kontaktierungselementes mit dem Akkumulator geöffnet wird. Dadurch ist das Kontaktierungselement während eines Positionierungsvorganges und Heben der Hebeeinrichtung bis unmittelbar vor dem direkten Kontakt mit dem Akkumulator vor äußeren Einflüssen und Verschmutzungen geschützt.

Bevorzugt ist das Förderband zumindest zweiteilig ausgebildet, wobei ein erster Teil und zumindest ein zweiter Teil vorzugsweise mittels einer ersten Feder und zumindest einer zweiten Feder verbunden sind, wobei eine Öffnung zwischen dem ersten Teil und dem zweiten Teil des Förderbandes öffenbar und schließbar ist. Durch eine Verbindung können die voneinander getrennten Teile des Förderbandes in Kombination über den Förderbandantrieb bewegt und gesteuert werden, wobei durch die Federn eine gedämpfte gekoppelte Bewegung ausführbar ist. Wenn der erste und der zweite Teil des Förderbandes an einer Oberseite der Vorrichtung jeweils in sich voneinander entfernende Richtungen bewegt werden, entsteht eine Öffnung, durch welche die Hebeeinrichtung mit dem Kontaktierungselement aus der Ruheposition in die Kontaktposition zum zu ladenden Akkumulator senkrecht angehoben werden kann. Dadurch wird die erste Feder gespannt. Nach erfolgter Ladung des Akkumulators und Absenken der Hebeeinrichtung in die Ruheposition kann die Öffnung durch eine zueinander gerichtete Bewegung des ersten Teiles und des zweiten Teiles des Förderbandes vollständig geschlossen werden. Dadurch kann die Hebeeinrichtung mit dem Kontaktierungselement und zusätzlich ein Innenraum der Basis vor Verschmutzung und Beschädigung durch äußere Einflüsse geschützt werden. Durch entsprechende Ausgleichselemente und Nachgiebigkeit der Mechanik können leichte Parkschäden während dem Laden ohne mechanische Zerstörung der Vorrichtung kompensiert werden. Es empfiehlt sich, über eine adäquate Diagnose, beispielsweise Beschleunigungssensoren oder Ähnliches, solch eine Beschädigung zu detektieren und gegebenenfalls Fehler/Service anzuzeigen.

Um einen Akkumulator laden zu können, hat es sich bewährt, dass das Kontaktierungselement mittels eines Kabels elektrisch mit einer Spannungsquelle verbindbar ist. Eine direkte Verbindung des Kontaktierungselementes und somit des Akkumulators mit der Spannungsquelle über ein Kabel resultiert in einem hohen Wirkungsgrad des Ladevorganges. Dadurch können die Ladezeit und auch Energieverluste deutlich verringert werden.

Zweckmäßigerweise ist das Kabel mittels zumindest einer Kabelführung, vorzugsweise zweier Kabelführungen, zum Kontaktierungselement geführt, wobei die zumindest eine Kabelführung vorzugsweise als Energiekette ausgebildet ist. Da das Kontaktierungselement zur Positionierung bewegt werden kann und das Kabel am Kontaktierungselement angeschlossen ist, sind Kabelführungen zur Vermeidung einer Beschädigung des Kabels zweckmäßig. Energieketten garantieren die Einhaltung kleinster zulässiger Biegeradien des Kabels, wodurch das Kabel vor mechanischer Beschädigung geschützt wird. Darüber hinaus wird das Kabel auch vor äußeren Einflüssen geschützt. Aus diesen Gründen kann eine Lebensdauer des Kabels durch die Kabelführung, beispielsweise durch Energieketten, verlängert werden.

Optional können an der Vorrichtung, vorzugsweise in unmittelbarer Nähe des Kontaktierungselementes, visuelle und/oder akustische Signalgeber angeordnet sein. Auf diese Weise kann der Benutzer über einen aktuellen Betriebszustand informiert werden. Der aktuelle Betriebszustand kann einerseits einen Koppelungsstatus des Kontaktierungselementes mit dem Elektrofahrzeug umfassen, andererseits können auch mögliche Fehlermodi bzw. Warnungen angezeigt werden.

Um den aktuellen Betriebszustand auch im Fahrzeug anzuzeigen, kann die Vorrichtung eine Sendeeinheit für eine drahtlose Kommunikation mit dem Fahrzeug oder mit einer anderen externen Empfangseinheit, beispielsweise mit einem Mobiltelefon, aufweisen. Für die drahtlose Kommunikation können bevorzugt Technologien wie Bluetooth oder WLAN vorgesehen sein. Dadurch kann ein sich im Fahrzeug befindlicher Benutzer oder für den Fall, dass die Vorrichtung auch von außen nicht unmittelbar einsichtig ist, Informationen über den aktuellen Betriebszustand abrufen. Weiter können vom Fahrzeug entsprechende akustische und/oder Lichtsignale der Lichtanlagen über den Betriebszustand des Laderoboters informieren, wenn zum Beispiel die Vorrichtung erfolgreich kontaktiert hat und zu Laden beginnt, analog wie bei Lichtsignalen beim Auf- und Zugsperren eines Fahrzeuges.

Es ist von Vorteil, wenn die Vorrichtung ein eigenes Betriebssystem aufweist, welches beispielsweise über ein Web-Backend verfügt, wodurch intelligentes und gesteuertes Laden durchführbar ist. Darüber hinaus kann auch eine intelligente Vernetzung mit anderen Vorrichtungen an anderen Standorten vorgesehen sein. Auf diese Weise können auch statistische Daten wie beispielsweise Energieverbrauch pro Fahrzeug oder Ladevorgänge pro Zeiteinheit erfasst werden. Darüber hinaus können auch automatische Abrechnungssysteme mit der Vorrichtung kombiniert werden.

Bevorzugt weist die Vorrichtung zusätzlich alle Funktionalitäten einer Wandladestation auf, wobei zur Erfüllung einer Sicherheits- und Kommunikationsfunktion eine In-Kabel-Kontrollbox (ICCB, In-Cable Control and Communication Box) angeordnet sein kann, womit eine Überwachung der Auslastung und des Ladevorganges durchführbar ist und Anomalien des Ladevorganges, aber auch Fehlermodi wie beispielsweise pulsierende Gleichströme erkannt werden können. Darüber hinaus kann ein Fehlerstrom-Schutzschalter zur Vermeidung von Stromunfällen integriert sein. Dafür kann vorgesehen sein, dass ein Relais oder ein Schütz zumindest drei Leiter, vorzugsweise fünf Leiter, einzeln oder gemeinsam trennen bzw. verbinden kann. Als Leiter können folgende Arten vorgesehen sein: die Außenleiter L1, L2, L3, ein Neutralleiter N und ein Schutzleiter PE oder die Gleichstromleistungsleiter DC+ und DC- mit dem Schutzleiter PE.

In einem weiteren Aspekt betrifft die Erfindung eine Einrichtung zur automatischen Positionierung eines Objektes, beispielsweise eines Elektrofahrzeuges oder einer erfindungsgemäßen Vorrichtung zum Laden eines Elektrofahrzeuges mittels eines an der erfindungsgemäßen Vorrichtung angeordneten Kontaktierungselementes, welches mit einer Spannungsquelle in Verbindung steht.

Es ist von Vorteil, wenn die Einrichtung zur Positionierung des Objektes als ein Ultraschallpositionierungssystem ausgebildet ist, welches zumindest drei Empfänger aufweist, wobei die Empfänger vorzugsweise als Mikrofone, insbesondere als MEMS-Mikrofone ausgebildet sind. Die Empfänger können auf einer ersten Empfängerplatine, vorzugsweise L-förmig, angeordnet sein, wobei die erste Empfängerplatine an einer Außenseite der Vorrichtung integriert sein kann. Bevorzugt beträgt der Abstand der beiden äußeren Mikrofone zu einem mittleren Mikrofon 4 mm. MEMS-Mikrofone können bevorzugt als Surface-mounted-device (SMD)-Bauelemente montiert werden, wodurch ein Löten der Bauelemente nur auf einer Seite der Empfängerplatine notwendig ist und eine kleinere Bauelementgröße erreicht werden kann. Die Empfängerplatine kann durch eine ultraschalldurchlässige Membran bzw. zusätzlich durch ein feines Gitter bzw. Drahtgeflecht geschützt werden und bündig in der Vorrichtung angeordnet sein. Die Empfängerplatine soll vorzugsweise durch entsprechende Beschichtungen gegen unerwünschtes, flächiges Einkoppeln von Ultraschall geschützt sein. Die Empfängerplatine kann aber auch fahrzeugseitig vorgesehen sein und die Sender am an der Vorrichtung.

Bevorzugt ist in unmittelbarer Nähe des Anschlusskontaktes des Fahrzeuges zumindest ein Ultraschallsender, vorzugsweise zwei oder Ultraschallsender, vorgesehen. Der Ultraschallsender kann als ein verkapselter Sender mit einem Durchmesser von 5 mm bis 20 mm, vorzugsweise 10 mm bis 15 mm, insbesondere 14 mm ausgebildet sein. Bei Verwendung von zwei Ultraschallsendern können diese in einem Abstand von 5 mm bis 20 mm, vorzugsweise 10 mm, angeordnet sein. Idealerweise ist der Ultraschallsender möglichst nahe am oder symmetrisch um das Kontaktierungselement positioniert. Des Weiteren kann der Sender akustisch entkoppelt sein, damit umliegende Teile nicht mitschwingen. Hierfür kann der Sender zum Beispiel von einem Siliconmantel umgeben sein.

Zweckmäßigerweise können die Ultraschallsender abwechselnd Rechtecksignale aussenden. Die Rechtecksignale, beispielsweise eine Serie von fünf Rechtecksignalen, können mit einer Frequenz von 20 kHz bis 100 kHz, vorzugsweise 30 kHz bis 50 kHz, insbesondere 40 kHz, ausgesendet werden und können einen positiven bzw. negativen Maximalwert von zumindest +20 V bzw. zumindest -20 V, vorzugsweise +30 V bzw. -30 V, aufweisen, wobei auch höhere Differenzspannungen von ± 60 V einsetzbar sind. Die Spannungshöhe bestimmt die abgestrahlte Schallleistung und sollte in einem Nahebereich dynamisch reduziert werden, um eine Sättigung der MEMS-Empfänger zu vermeiden.

Der Vorteil von Rechtecksignalen ist eine wechselseitige Anregung der Ultraschallsender zum Aussenden von Signalen, welche vorzugsweise vom mittleren Mikrofon der ersten Empfängerplatine empfangen werden können und wobei die absolute Schalllaufzeit gemessen wird. Um die Laufzeiten der Empfangseinheiten zu synchronisieren, kann ein Zeitstempel mitgesendet werden. In Kombination mit den äußeren, benachbarten Mikrofonen des mittleren Mikrofons der ersten Empfängerplatine kann aus den jeweiligen Laufzeitdifferenzen eine aktuelle Position ermittelt werden. Bevorzugt erfolgen das Aussenden bzw. ein Empfangen der Signale ohne jegliche zeitliche Verzögerung, um eine exakte Positionsbestimmung zu erreichen.

Auf diese Weise ist eine Zielführung des Elektrofahrzeuges während eines Einparkens durchführbar, da durch das Ultraschallpositionierungssystem die aktuelle Position des Fahrzeuges relativ zum Kontaktierungselement in der erfindungsgemäßen Vorrichtung jederzeit bestimmt wird und für einen Benutzer im Fahrzeug angezeigt werden kann. Da die Genauigkeit der Positionsbestimmung mit Annäherung zum Ziel zunimmt, kann das Elektrofahrzeug nach Unterschreiten einer vorab definierten Distanz zwischen Kontaktierungselement und Anschlusskontakt des Fahrzeuges von zumindest 1 cm, vorzugsweise 20 cm, gestoppt werden. Die restliche Distanz kann mittels Positionssteuerung der erfindungsgemäßen Vorrichtung überwunden werden.

Um die Genauigkeit der Positionierung des Kontaktierungselementes mittels der Vorrichtung zu optimieren, ist es vorteilhaft, wenn eine zweite Empfängerplatine mit zumindest drei Empfängern von Ultraschallsignalen in unmittelbarer Nähe des Kontaktierungselementes angeordnet ist. Die Empfänger der zweiten Empfängerplatine können baugleich den Empfängern der ersten Empfängerplatine ausgebildet sein und ebenso bevorzugt L-förmig, vorzugsweise im Abstand von 4 mm, auf der zweiten Empfängerplatine angeordnet sein. Der Vorteil der Anordnung der zweiten Empfängerplatine in der Nähe des Kontaktierungselementes ergibt sich dadurch, dass die Abdeckung des Kontaktierungselementes mittels der eigenen Blende erfolgen kann, durch welche auch die zweite Empfängerplatine vor äußeren Einflüssen wie Verschmutzung geschützt werden kann.

Ein weiterer Vorteil ergibt sich aus der Funktion der zweiten Empfängerplatine, da sich das Kontaktierungselement gemeinsam mit der zweiten Empfängerplatine an den Anschlusskontakt des Fahrzeuges, welcher mit dem Ultraschallsender ausgestattet sein kann, annähern kann und durch Interaktion des Ultraschallsenders des Akkumulators mit der, am Kontaktierungselement angeordneten zweiten Empfängerplatine eine präzise und robuste Positionsbestimmung durchführbar ist. Eine Information über eine ermittelte Position kann an eine Steuerungseinheit der Vorrichtung übertragen werden, welche auf Basis der ermittelten Daten die Bewegung der Vorrichtung lenken und korrigieren kann. Auf diese Weise ist eine äußerst genaue und robuste Ansteuerung des Anschlusskontaktes des Fahrzeuges mit dem Kontaktierungselement einfach und automatisch durchführbar, da bei Annäherung an die Zielposition die Positionsbestimmung zunehmend genauer wird und Fehlereinflüsse durch Reflexion, Beugung, unterschiedliche Temperaturen usw. keinen oder nur einen sehr geringen negativen Einfluss haben.

Wie vorstehend bereits erwähnt, können Sender und Empfänger auch vertauscht positioniert sein, ohne dass sich an der Funktionsweise etwas ändern würde.

Für eine Erhöhung einer Reichweite des Positionierungssystems kann vorgesehen sein, dass zusätzlich die Parksensoren des Fahrzeuges für eine Einparkhilfe mit dem Ultraschallpositionierungssystem gekoppelt werden.

Entsprechend den vorstehend dargestellten Vorteilen findet eine erfindungsgemäße Vorrichtung Verwendung zum Laden des Akkumulators eines Fahrzeuges, insbesondere eines Personenkraftfahrzeuges. Üblicherweise handelt es sich dabei um ein Elektrofahrzeug. Auch Akkumulatoren von E-Bussen oder E-Lkws können entsprechend geladen werden.

Ein weiteres Ziel wird dadurch erreicht, dass ein vertikal ausfahrbares Element, insbesondere ein Scherenhubtisch, zum vertikalen Heben und Senken eines Kontaktierungselementes zum Laden eines Elektrofahrzeuges, insbesondere eines Personenkraftfahrzeuges, verwendet wird. Dies stellt eine einfache technische Lösung zum senkrechten Heben und Senken des Kontaktierungselementes dar. Wie bereits vorstehend erläutert, ergeben sich die Vorteile des vertikal ausfahrbaren Elementes wie eines Scherenhubtisches aus einer gleichmäßigen und somit fehlerfreien Koppelung des Kontaktierungselementes mit dem Akkumulator und der Möglichkeit der einfachen elektronischen Steuerung der Bewegung beispielsweise des Scherenhubtisches, da die Bewegung lediglich einen Freiheitsgrad umfasst.

Die verfahrensmäßige Aufgabe der Erfindung wird gelöst, wenn bei einem Verfahren der eingangs genannten Art zur Herstellung einer elektrischen Verbindung ein mit einer elektrischen Spannungsquelle in Verbindung stehendes Kontaktierungselement mittels einer erfindungsgemäßen Vorrichtung mit der Einrichtung in Kontakt gebracht wird, wonach das Kontaktierungselement unter der Einrichtung positioniert wird und durch ein Verschieben der Hebeeinrichtung entlang einer ersten Bewegungseinrichtung senkrecht zu einer Grundfläche einer Basis angehoben und kontaktiert wird.

Ein mit einem erfindungsgemäßen Verfahren erzielter Vorteil ist insbesondere darin zu sehen, dass auf einfache Weise ein Elektrofahrzeug oder ein anderes Objekt zum Laden des Akkumulators mit einer elektrischen Spannung in Kontakt gebracht werden kann. Eine Positionierung des Kontaktierungselementes, welches mittels eines Kabels mit der Spannungsquelle verbunden wird, ist einfach durchführbar und ermöglicht eine einfache elektronische Steuerung.

Weitere Merkmale, Vorteile und Wirkungen ergeben sich aus den nachfolgend dargestellten Ausführungsbeispielen. In den Zeichnungen, auf welche dabei Bezug genommen wird, zeigen:
Fig. 1 eine perspektivische und schematische Darstellung einer erfindungsgemäßen Vorrichtung in Kontaktposition;
Fig. 2 eine weitere perspektivische Ansicht der Vorrichtung gemäß Fig. 1 in Kontaktposition;
Fig. 3a eine perspektivische Ansicht der Vorrichtung gemäß Fig. 1 in Kontaktposition mit geöffnetem Gehäuse;
Fig. 3b eine perspektivische Darstellung der Vorrichtung gemäß Fig. 1 in Ruheposition mit geöffnetem Gehäuse;
Fig. 3c eine perspektivische Darstellung der Vorrichtung gemäß Fig. 1 in Ruheposition mit geschlossenem Gehäuse;
Fig. 4 ein weiteres Ausführungsbeispiel einer erfindungsgemäßen Vorrichtung;
Fig. 5 eine Detailansicht V des Ausführungsbeispiels gemäß Fig. 4;
Fig. 6a eine perspektivische Ansicht des Ausführungsbeispiels gemäß Fig. 4 in Ruheposition mit Gehäuse und in zwei Abschnitte geteiltem Förderband;
Fig. 6b eine perspektivische Ansicht des Ausführungsbeispiels gemäß Fig. 4 mit geschlossenem Förderband.

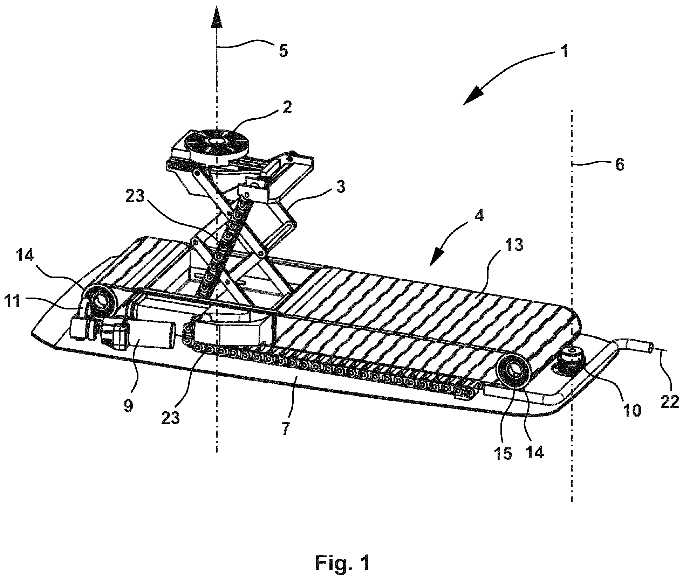

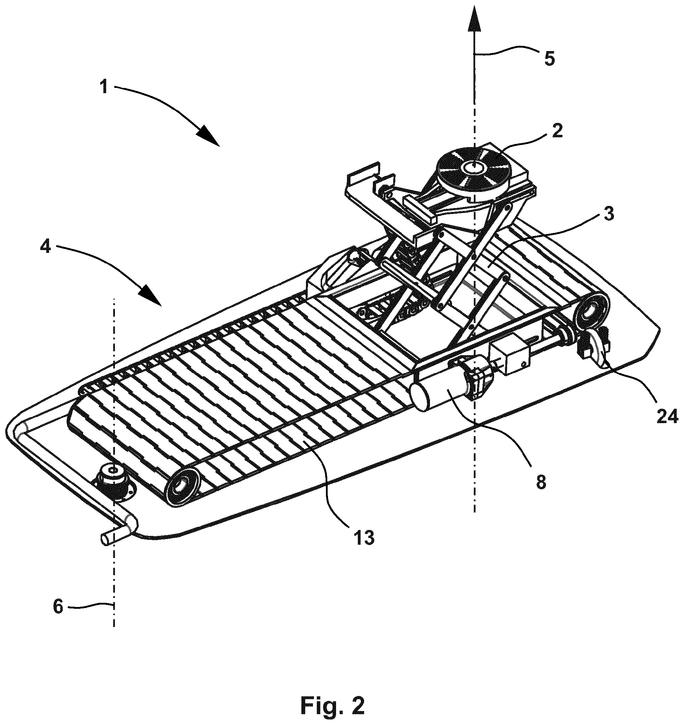

Fig. 1 zeigt eine perspektivische Ansicht einer erfindungsgemäßen Vorrichtung 1 zum elektrischen Laden eines Akkumulators eines Elektrofahrzeuges, umfassend ein Kontaktierungselement 2, eine Hebeeinrichtung 3 und eine Basis 4. Die Basis 4 umfasst ein Förderband 13, welches mittels zweier Umlenkrollen 14 umgelenkt wird und einen Drehkranz 10, welcher gefedert gelagert ist. Ein Vorteil einer Verwendung des Drehkranzes 10 ist eine Übertragung einer Drehbewegung bei gleichzeitiger Sperrung der restlichen fünf Freiheitsgrade. Somit kann die Basis 4 mittels eines Antriebsrades 11 um eine Schwenkachse 6 parallel zu einer Grundfläche 7 geschwenkt werden. Das Antriebsrad 11 wird mittels eines, neben einem ersten Antrieb 8 (siehe Fig. 2) vorgesehenen, zweiten Antriebes 9 angetrieben, womit eine einfache und elektronische Steuerung der Drehbewegung ermöglicht wird. Das Förderband 13 dient einer linearen Verschiebung der Hebeeinrichtung 3 parallel zur Grundfläche 7 entlang einer Längsachse der Basis 4. Zur Bewegung des Förderbandes 13 ist ein Jalousiemotor 15 vorgesehen, welcher in einer Umlenkrolle 14 angeordnet ist. Optional können beiden Umlenkrollen 14 jeweils einen Jalousiemotor 15 aufweisen. Somit kann das Kontaktierungselement 2 in einer Ebene parallel zur Grundfläche 7 direkt unter einem Anschlusskontakt des Fahrzeuges positioniert werden, einerseits durch Drehung der Basis 4 um eine Schwenkachse 6 und andererseits durch Verschiebung der Hebeeinrichtung 3 entlang der Längsachse der Basis 4 mittels des Förderbandes 13.

Darüber hinaus ist in Fig. 1 ersichtlich, dass, um in einem nächsten Schritt das Kontaktierungselement 2 mit dem nicht dargestellten Anschlusskontakt des Fahrzeuges zu koppeln, das Kontaktierungselement 2 mittels der Hebeeinrichtung 3 entlang einer ersten Bewegungsrichtung 5 angehoben werden kann, wobei das Kontaktierungselement 2 im dargestellten Ausführungsbeispiel auf einer Oberseite der Hebeeinrichtung 3 angeordnet ist. Der Vorteil einer solchen Anordnung ist, dass einerseits eine bessere Kraftübertragung von der Hebeeinrichtung 3 auf das Kontaktierungselement 2 zum Kontaktieren mit dem Anschlusskontakt des Fahrzeuges erreicht werden kann, andererseits ermöglicht diese Anordnung eine gleichmäßige Kontaktierung des Kontaktierungselementes 2 mit dem Anschlusskontakt ohne eine Gefahr einer Verkippung des Kontaktierungselementes 2 durch äußere Einflüsse, wie zum Beispiel Gravitation. Die Hebeeinrichtung 3 ist als Scherenhubtisch ausgebildet, welcher eine richtungstreue, geradlinige Bewegung der Hebeeinrichtung 3 und somit des Kontaktierungselementes 2 entlang der ersten Bewegungsrichtung 5 ermöglicht.

Wie in Fig. 1 ersichtlich, ist ein Kabel 22 zur Verbindung des Kontaktierungselementes 2 mit einer elektrischen Spannungsquelle vorgesehen. Das Kabel 22 wird mittels einer Kabelführung zur Vorrichtung geführt. Um eine Bewegung des Kontaktierungselementes 2 ohne mechanische Beschädigung des Kabels 22 zu ermöglichen, wird das Kabel 22 mittels zweier, voneinander unabhängiger Energieketten 23 innerhalb der Vorrichtung zum Kontaktierungselement 2 geführt.

Fig. 2 zeigt eine weitere Ansicht der Vorrichtung 1 gemäß Fig. 1. Dabei ist ebenso ersichtlich, dass das Kontaktierungselement 2 mittels einer Hebeeinrichtung 3, welche als Scherenhubtisch ausgebildet ist, in eine erste Bewegungsrichtung 5 anhebbar ist. Für ein Heben und Senken des Scherenhubtisches ist ein erster Antrieb 8 vorgesehen, welcher eine elektronische und präzise Steuerung der Bewegung des Scherenhubtisches ermöglicht. Darüber hinaus ist in dieser Ansicht ein Stützrad 24 ersichtlich, welches zur Unterstützung der Drehbewegung der Basis 4 mittels des Antriebsrades 11 um die Drehachse 6 angeordnet ist.

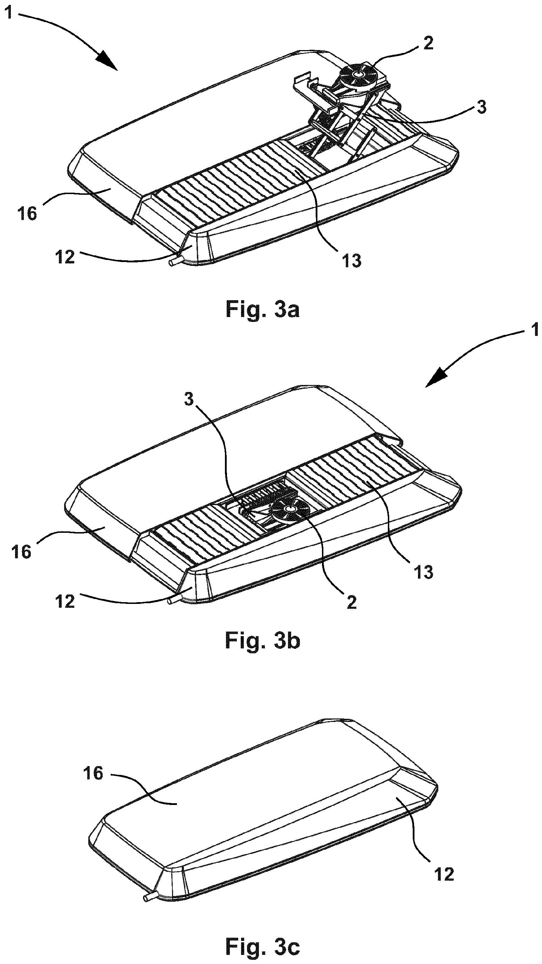

Fig. 3a zeigt die Vorrichtung 1 in einer Arbeitsposition, bei welcher die Hebeeinrichtung 3 angehoben ist, um das Kontaktierungselement 2 mit dem Anschlusskontakt des Fahrzeuges zu koppeln. Ein Gehäuse 12 mit einer Abdeckungseinrichtung 16 ist in der Arbeitsposition geöffnet, um die Hebeeinrichtung 3 aus der Basis 4 anheben zu können. Das Gehäuse 12 ist vorne bzw. in der Anfahrrichtung stark abgeflacht, um Kräfte beim Überfahren gut aufnehmen zu können. In Fig. 3b ist eine perspektivische Ansicht einer Ruheposition der Vorrichtung 1 dargestellt, in welcher die Hebeeinrichtung 3 mit dem Kontaktierungselement 2 innerhalb der Basis 4 abgesenkt ist, wobei das Gehäuse 12 mit der Abdeckungseinrichtung 16 in einem geöffneten Zustand dargestellt ist. Fig. 3c zeigt die Ruheposition der Vorrichtung 1, in welcher alle Komponenten innerhalb der Basis 4 untergebracht sind und das Gehäuse 12 mit der Abdeckungseinrichtung 16 geschlossen ist. Die Vorrichtung 1 ist im Ruhezustand durch Verschließen des Gehäuses 12 mit der Abdeckungseinrichtung 16 vor Schmutz und mechanischer Beschädigung geschützt und ist bereit für einen nächsten Ladevorgang eines nächsten Elektrofahrzeuges.

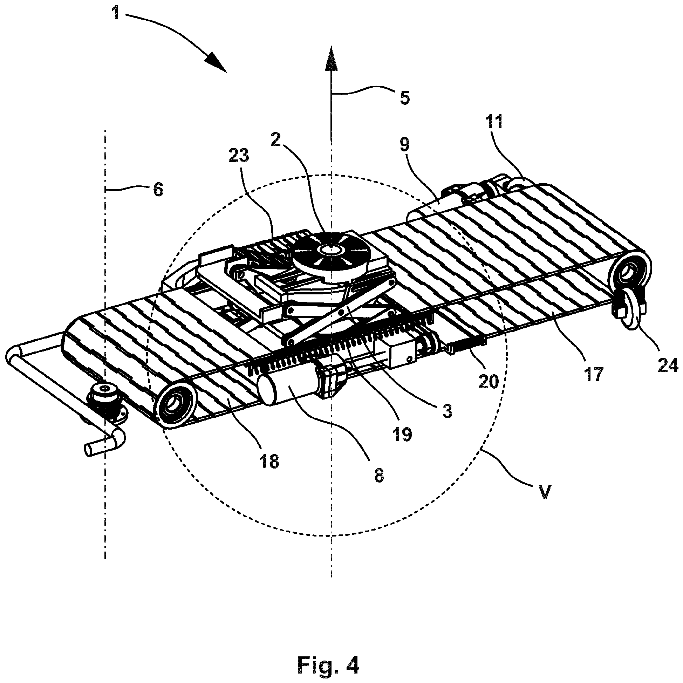

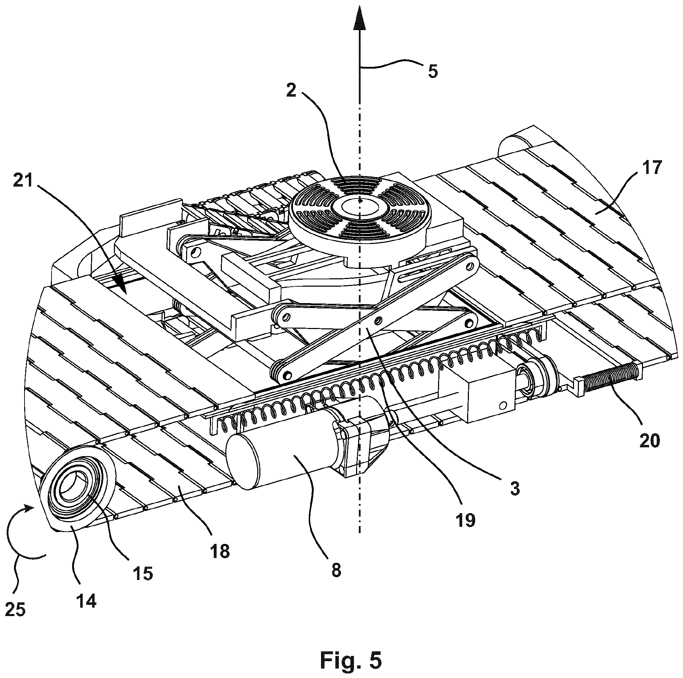

Fig. 4 zeigt eine perspektivische Darstellung eines weiteren Ausführungsbeispiels der erfindungsgemäßen Vorrichtung 1 ohne Darstellung des Gehäuses 12. Das Kontaktierungselement 2 ist an der Oberseite der Hebeeinrichtung 3 angeordnet und kann mittels der Hebeeinrichtung 3 in die erste Bewegungsrichtung 5 angehoben werden. Die Hebeeinrichtung 3 ist als Scherenhubtisch ausgebildet, welcher mittels des ersten Antriebes 8 in die erste Bewegungsrichtung 5 gehoben und gesenkt werden kann. Des Weiteren umfasst das in Fig. 4 dargestellte Ausführungsbeispiel die Basis 4, wobei die Basis 4 um die Schwenkachse 6 mittels eines Antriebsrades 11 und eines zweiten Antriebes 9 gedreht werden kann. Das mit dem Kontaktierungselement 2 verbundene Kabel 22 wird mit Energieketten 23 geführt, um eine beschädigungsfreie Bewegung des Kabels innerhalb der Vorrichtung 1 zu verhindern. Der Unterschied zum in Fig. 1 dargestellten Ausführungsbeispiels liegt in der Ausbildung des Förderbandes 13, welches in diesem Ausführungsbeispiel zweiteilig ausgebildet ist, wobei ein erster Teil 17 und ein zweiter Teil 18 des Förderbandes 13 durch eine erste Feder 19 und eine zweite Feder 20 verbunden sind. Durch eine Verbindung der Teile des Förderbandes 13 mittels Federn ist eine gedämpfte, gekoppelte Bewegung des Förderbandes 13 entlang einer Längsachse der Vorrichtung 1 ausführbar. Ein in Fig. 4 markierter Ausschnitt V ist in Fig. 5 vergrößert dargestellt.

Fig. 5 zeigt eine Detailansicht des Ausschnittes V des Ausführungsbeispiels gemäß Fig. 4. Dabei ist ersichtlich, dass der erste Teil 17 und der zweite Teil 18 des Förderbandes 13 durch eine erste Feder 19 und eine zweite Feder 20 verbunden sind. Durch Bewegung des zweiten Teiles 18 des Förderbandes 13 mittels eines Jalousiemotors 15, welcher in einer Umlenkrolle 14 angeordnet ist, kann die Öffnung 21 geöffnet oder geschlossen werden.

In Fig. 5 ist ein geöffneter Zustand des Förderbandes 13 dargestellt, in welchem die erste Feder 19 in einem gespannten und die zweite Feder 20 in einem nicht gespannten Zustand sind. Um die Öffnung 21 zu schließen, wird in der dargestellten Ansicht durch Drehung der Umlenkrolle in eine Drehrichtung 25 eine Oberseite des zweiten Teiles 18 des Förderbandes 13 in Richtung Hebeeinrichtung 3 bewegt. Der erste Förderbandteil 17 bewegt sich deutlich langsamer, wodurch die erste Feder 19 entspannt, und die zweite Feder 20 gespannt wird. Dadurch wird die Öffnung 21 verschlossen. Durch Drehung der Umlenkrolle mittels des Jalousiemotors 15 in eine Gegenrichtung der Drehrichtung 25 wird die erste Feder 19 gespannt und die zweite Feder 20 entspannt und die Öffnung 21 wieder geöffnet. Wenn die Öffnung 21 geöffnet ist, kann das Kontaktierungselement 2 über die Hebeeinrichtung 3 mittels des ersten Antriebes 8 aus einer Ruheposition entlang der erste Bewegungsrichtung 5 in eine Kontaktposition angehoben werden.

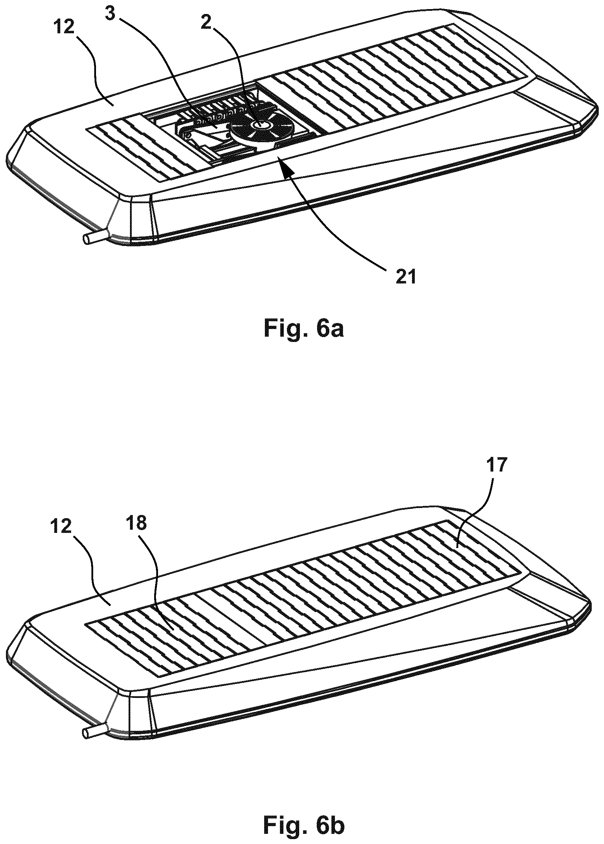

Fig. 6a zeigt eine perspektivische Darstellung des Ausführungsbeispiels der erfindungsgemäßen Vorrichtung 1 gemäß Fig. 4 in der Ruheposition, in welcher die Hebeeinrichtung 3 mit dem Kontaktierungselement 2 durch die Öffnung 21 innerhalb der Basis 4 abgesenkt dargestellt ist. Das Gehäuse 12 ist als ein äußerer Rahmen zum Schutz vor Verschmutzung und Beschädigung der Basis 4 ausgebildet.

Fig. 6b zeigt eine perspektivische Darstellung des Ausführungsbeispiels der erfindungsgemäßen Vorrichtung 1 gemäß Fig. 4 in der Ruheposition, wobei in der dargestellten Ansicht das Förderband 13 die Öffnung 21 zum Schutz der Basis vor Verschmutzung und Beschädigung verschließt. Das Gehäuse 12 schützt die äußere Begrenzung der Basis 4 und dient als stabiler Rahmen der Basis. Um die Öffnung 21 des Förderbandes 13 zu verschließen, wurden der erste Teil 17 und der zweite Teil 18 des Förderbandes 13 mittels des Jalousiemotors 15, wie in Fig. 5 beschrieben, zueinander bewegt. Durch das Verschließen der Öffnung 21 des Förderbandes 13 wird die Hebeeinrichtung 3 mit dem Kontaktierungselement 2 effektiv vor Verschmutzung und Beschädigung geschützt. Optional kann mittels einer zusätzlichen Abdeckungseinrichtung auch das Förderband 13 abgedeckt werden, welche jedoch in Fig. 6b nicht dargestellt ist.

Für den Fall eines Stromausfalles während eines Ladevorganges kann ein zusätzlicher Akkumulator verbaut sein, welcher bei Stromausfall die notwendige Energie bereitstellt, um die Vorrichtung 1 in die Ausgangsposition zu bewegen. Ergänzend oder alternativ kann auch eine mechanische Notentriegelung vorgesehen sein, sodass die Vorrichtung 1 manuell in die Ausgangsposition bewegt werden kann.

## Patentansprüche

1. Vorrichtung (1) zum elektrischen Energieaustausch eines Objektes mit einem Akkumulator, insbesondere zum Laden eines Akkumulators eines Elektrofahrzeuges, aufweisend ein Kontaktierungselement (2), eine Hebeeinrichtung (3) und eine Basis (4), wobei das Kontaktierungselement (2) an der Hebeeinrichtung (3) angeordnet ist und die Hebeeinrichtung (3) mit der Basis (4) in Verbindung steht, **dadurch gekennzeichnet, dass** die Hebeeinrichtung (3) im Wesentlichen senkrecht in einer ersten Bewegungsrichtung (5) bewegbar und auf der Basis (4) verschiebbar ist, wobei die Basis (4) um eine Schwenkachse (6) drehbar gelagert ist.

2. Vorrichtung (1) nach Anspruch 1, **dadurch gekennzeichnet, dass** das Kontaktierungselement (2) auf einer Oberseite der Hebeeinrichtung (3) angeordnet ist.

3. Vorrichtung (1) nach Anspruch 1 oder 2, **dadurch gekennzeichnet, dass** die Hebeeinrichtung (3) auf der Basis (4) im Wesentlichen parallel zu einer Grundfläche (7) der Basis (4) verschiebbar ist.

4. Vorrichtung (1) nach Anspruch 3, **dadurch gekennzeichnet, dass** die erste Bewegungsrichtung (5) im Wesentlichen orthogonal zur Grundfläche (7) der Basis (4) ausgerichtet ist.

5. Vorrichtung (1) nach einem der Ansprüche 1 bis 4, **dadurch gekennzeichnet, dass** die Schwenkachse (6) im Wesentlichen parallel zur ersten Bewegungsrichtung (5) ausgerichtet ist.

6. Vorrichtung (1) nach einem der Ansprüche 1 bis 5, **dadurch gekennzeichnet, dass** ein erster Antrieb (8) vorgesehen ist, mit welchem eine Bewegung der Hebeeinrichtung (3) in die erste Bewegungsrichtung (5) steuerbar ist.

7. Vorrichtung (1) nach einem der Ansprüche 1 bis 6, **dadurch gekennzeichnet, dass** die Hebeeinrichtung (3) als ein Scherenhubtisch ausgebildet ist.

8. Vorrichtung (1) nach einem der Ansprüche 1 bis 7, **dadurch gekennzeichnet, dass** ein zweiter Antrieb (9) für eine Drehung der Basis (4) um die Schwenkachse (6) vorgesehen ist, wobei eine Lagerung der Basis (4) vorzugsweise als ein Drehkranz (10) ausgebildet ist.

9. Vorrichtung (1) nach Anspruch 8, **dadurch gekennzeichnet, dass** zumindest ein Antriebsrad (11) vorgesehen ist, mit welchem die Drehung der Basis (4) ausführbar ist, wobei das zumindest eine Antriebsrad (11) vorzugsweise gefedert gelagert ist.

10. Vorrichtung (1) nach einem der Ansprüche 1 bis 9, **dadurch gekennzeichnet, dass** die Hebeeinrichtung (3) auf Rollelementen und/oder Gleitelementen gelagert ist, wobei die Rollelemente und/oder Gleitelemente vorzugsweise seitlich an der Hebeeinrichtung (3) angeordnet sind.

11. Vorrichtung (1) nach einem der Ansprüche 1 bis 10, **dadurch gekennzeichnet, dass** die Basis (4) ein Gehäuse (12), vorzugsweise ein Aluminiumgehäuse, und ein Förderband (13) umfasst und bevorzugt die Hebeeinrichtung (3) mittels des Förderbandes (13) auf der Basis (4) verschiebbar ist, wobei das Förderband (13) vorzugsweise aus Scharnierplatten ausgebildet ist und vorzugsweise zumindest zwei Umlenkrollen (14) umfasst.

12. Vorrichtung (1) nach Anspruch 11, **dadurch gekennzeichnet, dass** zumindest ein Förderbandantrieb vorgesehen ist, mit welchem das Förderband (13) bewegbar ist, wobei der zumindest eine Förderbandantrieb vorzugsweise als ein Jalousiemotor (15) ausgebildet ist.

13. Vorrichtung (1) nach Anspruch 11 oder 12, **dadurch gekennzeichnet, dass** das Förderband (13) zumindest zweiteilig ausgebildet ist, wobei ein erster Teil (17) und zumindest ein zweiter Teil (18) vorzugsweise mittels einer ersten Feder (19) und zumindest einer zweiten Feder (20) verbunden sind, wobei eine Öffnung (21) zwischen dem ersten Teil (17) und dem zweiten Teil (18) des Förderbandes (13) öffenbar und schließbar ist.

14. Verwendung eines vertikal ausfahrbaren Elementes, insbesondere eines Scherenhubtisches, zum vertikalen Heben und Senken eines Kontaktierungselementes (2) zum Laden eines Elektrofahrzeuges, insbesondere eines Personenkraftfahrzeuges.

15. Verfahren zum elektrischen Laden einer Einrichtung, insbesondere einer beweglichen Einrichtung wie eines Elektrofahrzeuges, wobei die Einrichtung für eine elektrische Verbindung mit einer Spannungsquelle positioniert wird, um einen Akkumulator der Einrichtung zu laden, **dadurch gekennzeichnet, dass** zur Herstellung einer elektrischen Verbindung ein, mit einer elektrischen Spannungsquelle in Verbindung stehendes Kontaktierungselement (2) mittels einer Vorrichtung (1) nach einem der Ansprüche 1 bis 14 mit der Einrichtung in Kontakt gebracht wird, wonach das Kontaktierungselement (2) unter der Einrichtung positioniert wird und durch eine Verschiebung der Hebeeinrichtung (3) entlang einer ersten Bewegungsrichtung (5) angehoben und kontaktiert wird.
